# EUROPÄISCHE PATENTANMELDUNG

(11) **EP 4 467 400 A1**
(43) Veröffentlichungstag der Anmeldung: **27.11.2024**
(21) Anmeldenummer: 24177804.2
(22) Anmeldetag: 23.05.2024
(51) Int. Cl.: B60R 21/017

(54) **VERFAHREN ZUM STARTEN EINER ELEKTRONISCHEN SCHALTUNG FÜR EIN AIRBAGSYSTEM**

(30) Priorität: 25.05.2023 DE 102023113861
(71) Anmelder: Elmos Semiconductor SE, 44227 Dortmund (DE)
(72) Erfinder: KAPOOR, Niron, 45357 Essen (DE); ABAZA, Fikret, 47169 Duisburg (DE); SUDHAUS, André, 45665 Recklinghausen (DE); LIEDTKE, Marco, 59069 Hamm (DE); GERSEMSKY, Frank, 45659 Recklinghausen (DE)
(74) Vertreter: Wenzel Nemetzade Warthmüller Patentanwälte Part mbB

(57) **Zusammenfassung**

Es wird ein Verfahren zum Starten einer elektronischen Schaltung (5) für ein Airbagsystem vorgeschlagen, wobei die elektronische Schaltung (5) zum Zünden eines Airbags (85) des Airbagsystems ausgebildet ist, wobei bei der elektronischen Schaltung (5) ein Ausgang (24) eines ersten Spannungswandlers (20) mit einem Eingang (32) eines zweiten Spannungswandlers (30) verbunden ist, ein Ausgang (34) des zweiten Spannungswandlers (30) mit einem Eingang (42) einer Ladevorrichtung (40) verbunden ist, und ein Ausgang (44) der Ladevorrichtung (40) mit einer Energiereservevorrichtung (55) zum Speichern einer Energiereserve zum Zünden des Airbags (85) verbunden ist, wobei das Verfahren folgende Schritte umfasst: Anlegen einer Versorgungsspannung an den Eingang (22) des ersten Spannungswandlers (20); Steuern des ersten Spannungswandlers (20) in einer ersten Startphase (91) der elektronischen Schaltung (5) derart, dass der erste Spannungswandler (20) einen ersten Spannungswert ausgibt; Steuern der Ladevorrichtung (40) in einer zweiten Startphase (92) der elektronischen Schaltung (5) derart, dass die Energiereservevorrichtung (55) auf zumindest ca. 90%, insbesondere zumindest ca. 95%, vorzugsweise zumindest ca. 99%, besonders vorzugsweise ca. 100%, des ersten Spannungswerts gebracht wird; und Steuern des zweiten Spannungswandlers (30) in einer dritten Startphase (93) der elektronischen Schaltung (5) derart, dass ein zweiter Spannungswert, der höher als der erste Spannungswert ist, an dem Ausgang (34) des zweiten Spannungswandlers (30) anliegt, und am Ausgang (44) der Ladevorrichtung (40) ein dritter Spannungswert, der höher als der erste Spannungswert ist, anliegt.

## Beschreibung

Die Erfindung betrifft u.a. ein Verfahren zum Starten einer elektronischen Schaltung für ein Airbagsystem.

### Stand der Technik

Eine Vielzahl von elektronischen Schaltungen zum Zünden eines Airbagsystems, z.B. in einem Kraftfahrzeug, ist bekannt.

Eine Energiereservevorrichtung einer elektronischen Schaltung speichert Energie zum Zünden des Airbags des Airbagsystems im Falle eines Unfalls. Beim Starten des Kraftfahrzeugs bzw. der elektronischen Schaltung muss die Energiereservevorrichtung mit Energie geladen werden. Hierzu weisen bisher bekannte elektronische Schaltungen einen Spannungswandler auf, um aus einer Versorgungsspannung, die an der elektronischen Schaltung anliegt, eine erhöhte Spannung zum Laden der Energiereservevorrichtung zu erzeugen.

Nachteilig an bisher bekannten Verfahren zum Starten einer elektronischen Schaltung für ein Airbagsystem ist, dass sehr viel Wärme bzw. Verlustleistung erzeugt wird. Zudem dauert es bei bisher bekannten elektronischen Schaltungen lange, bis eine Energiereserve der elektronischen Schaltung zur Verfügung steht. Auch wird bei bisher bekannten elektronischen Schaltungen die Energie der Energiereservevorrichtung im Fall eines Abfalls bzw. eines Ausfalls der Versorgungsspannung ineffizient verwendet bzw. kann nach einem Abfall bzw. einem Ausfall der Versorgungsspannung der Betrieb der elektronischen Schaltung und/oder eines Mikrocontrollers, der von der elektrischen Schaltung versorgt wird, nicht lange aufrechterhalten werden.

### Offenbarung der Erfindung

Der Erfindung liegt die Aufgabe zu Grunde, ein Verfahren zum Starten einer elektronischen Schaltung für ein Airbagsystem aufzuzeigen, das eine geringe Verlustleistung aufweist und das schnell die Bereitstellung einer Energiereserve für den Fall des Abfalls bzw. Ausfalls einer Versorgungsspannung ermöglicht.

Diese Aufgabe wird durch ein Verfahren zum Starten einer elektronischen Schaltung für ein Airbagsystem gemäß Anspruch 1 gelöst.

Insbesondere wird die Aufgabe durch ein Verfahren zum Starten einer elektronischen Schaltung für ein Airbagsystem gelöst, wobei die elektronische Schaltung zum Zünden eines Airbags des Airbagsystems ausgebildet ist, wobei bei der elektronischen Schaltung ein Ausgang eines ersten Spannungswandlers mit einem Eingang eines zweiten Spannungswandlers verbunden ist, ein Ausgang des zweiten Spannungswandlers mit einem Eingang einer Ladevorrichtung verbunden ist, und ein Ausgang der Ladevorrichtung mit einer Energiereservevorrichtung zum Speichern einer Energiereserve zum Zünden des Airbags verbunden ist, wobei das Verfahren folgende Schritte umfasst: Anlegen einer Versorgungsspannung an den Eingang des ersten Spannungswandlers; Steuern des ersten Spannungswandlers in einer ersten Startphase der elektronischen Schaltung derart, dass der erste Spannungswandler einen ersten Spannungswert ausgibt; Steuern der Ladevorrichtung in einer zweiten Startphase der elektronischen Schaltung derart, dass die Energiereservevorrichtung auf zumindest ca. 90%, insbesondere zumindest ca. 95%, vorzugsweise zumindest ca. 99%, besonders vorzugsweise ca. 100%, des ersten Spannungswerts gebracht wird; und Steuern des zweiten Spannungswandlers in einer dritten Startphase der elektronischen Schaltung derart, dass ein zweiter Spannungswert, der höher als der erste Spannungswert, insbesondere höher als der dritte Spannungswert ist, an dem Ausgang des zweiten Spannungswandlers anliegt, und am Ausgang der Ladevorrichtung ein dritter Spannungswert, der höher als der erste Spannungswert ist, anliegt.

Ein Vorteil hiervon ist, dass beim Starten der elektronischen Schaltung geringe Verlustleistungen insbesondere in der Ladevorrichtung auftreten. Somit kann die elektronische Schaltung besonders kompakt ausgebildet sein und vor zu großer Erwärmung besser geschützt werden. Zudem werden die Spannungen nacheinander sozusagen hochgefahren bzw. sequentiell und mit zumindest zeitweise reduzierten Übersetzungsverhältnissen gestartet, wodurch die Effizienz besonders hoch ist bzw. die Nutzung der vorhandenen Spannung bzw. Energie besonders effizient ist. Somit kann die Energiereservevorrichtung schnell bzw. zu einem frühen Zeitpunkt zur Verfügung stehen. Auch kann ein Mikrocontroller, der von der elektronischen Schaltung mit Spannung versorgt wird, gestartet werden, bevor die Energiereservevorrichtung vollständig geladen wurde. Der zweite Spannungswert in der dritten Startphase wird dabei vorteilhafterweise derart angelegt, dass eine für den Betrieb bzw. den Betrieb der Ladevorrichtung ausreichende Spannungsdifferenz zwischen dem zweiten Spannungswert und dem dritten Spannungswert erzeugt wird, so dass die Ladevorrichtung bei geringer Verlustleistung betrieben werden kann. Der zweite Spannungswert kann dynamisch bzw. variabel oberhalb des dritten Ausgangsspannungswerts liegen. Der zweite Spannungswandler kann derart geregelt werden, dass der zweite Spannungswert geringfügig (z.B. ca. 3%, ca. 5%, ca. 10%, ca. 1 V, ca. 3 V oder ca. 5 V) oberhalb des dritten Spannungswerts liegt. Dies kann auch abhängig von der Verlustleistung der Ladevorrichtung gesteuert oder geregelt werden. Der zweite Spannungswert bzw. der dritte Spannungswert kann adaptiv eingestellt werden, z.B. abhängig von der Verlustleistung in der Ladevorrichtung. In der zweiten Startphase kann die Ausgangsspannung des zweiten Spannungswandlers, d.h. der Spannungswert am Ausgang des zweiten Spannungswandlers, minimal bzw. geringfügig (z.B. 1%, 2%, 3%, 5%, 10%, ca. 1 V, ca. 3 V oder ca. 5 V) höher sein als der Wert der Spannung sein, die die Energiereservevorrichtung aufweist. In der zweiten Startphase kann der zweite Spannungswandler auf Durchgang geschaltet sein (Eingangsspannung=Ausgangsspannung) oder der zweite Spannungswandler kann eine Spannung an seinem Ausgang ausgeben, die höher, z.B. 1%, 3%, 5% oder 10% höher, als der erste Spannungswert bzw. als der Wert der Spannung an seinem Eingang ist. Es ist möglich, dass der Wert der zweiten Ausgangsspannung nur insoweit über den Wert der dritten Ausgangsspannung angehoben wird, wie es für den Betrieb der Ladevorrichtung notwendig. Auf diese Weise wird die Leistung in der Ladevorrichtung minimiert.

Zudem liegt der Erfindung die Aufgabe zu Grunde, eine elektronische Schaltung zum Zünden eines Airbags aufzuzeigen, bei dem besonders zuverlässig das Unterbrechen einer Spannungsversorgung der elektronischen Schaltung erkannt werden kann.

Diese Aufgabe wird durch eine elektronische Schaltung gemäß Anspruch 8 gelöst.

Insbesondere wird die Aufgabe durch eine elektronische Schaltung zum Zünden eines Airbags gelöst, wobei die elektronische Schaltung folgendes umfasst: einen ersten Spannungswandler, einen zweiten Spannungswandler, eine Ladevorrichtung, eine Energiereservevorrichtung zum Speichern einer Energiereserve zum Zünden des Airbags, wobei der Ausgang des ersten Spannungswandlers mit einem Eingang des zweiten Spannungswandlers verbunden ist, wobei ein Ausgang des zweiten Spannungswandlers mit einem Eingang der Ladevorrichtung verbunden ist, wobei ein Ausgang der Ladevorrichtung mit der Energiereservevorrichtung verbunden ist, und wobei die Energiereservevorrichtung über einen Autarkieschalter mit dem Ausgang des ersten Spannungswandlers verbunden ist.

Ein Vorteil hiervon ist, dass die von der Energiereservevorrichtung zur Verfügung gestellte Spannung im Autarkiemodus bzw. bei einer Unterbrechung der Spannungsversorgung am ersten Spannungswandler, z.B. bei einem Unfall und dem hierdurch eingetretenen Abriss der Versorgungsleitung, nicht an einer Stelle zur Verfügung gestellt wird, an der das Unterschreiten der Spannungsversorgung erkannt werden soll und an der das Unterschreiten der Spannungsversorgung das Umschalten in den Autarkiemodus auslösen soll, sondern im Autarkiemodus wird die Spannung der Energiereservevorrichtung an einer anderen Stelle der elektronischen Schaltung zur Verfügung gestellt. Durch die Trennung der Position, an der die Versorgungsspannung der elektronischen Schaltung überwacht wird (z.B. Eingang des ersten Spannungswandlers), um ein Abfallen der Versorgungsspannung bzw. ein Problem mit der Versorgungsspannung zu erkennen, und der Position, an der bei einem Unfall bzw. einem festgestellten Abfallen der Versorgungspannung die Energie bzw. Spannung aus der Energiereservevorrichtung zur Verfügung gestellt wird (z.B. Ausgang des ersten Spannungswandlers), kann technisch besonders einfach und zuverlässig ein Abfallen der Spannung, die der elektronischen Schaltung zur Verfügung gestellt wird, unter einen vorbestimmten Wert (bzw. dass die Spannung kleiner gleich dem vorbestimmten Wert ist) festgestellt werden. Somit kann besonders zuverlässig in den Autarkiemodus gewechselt werden, d.h. es wird nur tatsächlich dann in den Autarkiemodus gewechselt, wenn die Spannungsversorgung unter einen vorgegebenen Wert abfällt. Somit kann besonders zuverlässig über einen Wechsel in den Autarkiemodus entschieden werden und unnötige Ein- und Ausschaltvorgänge des Autarkiemodus vermieden werden. Zudem ist vorteilhaft, dass der zweite Spannungswandler in Bezug auf die benötigte Leistung bzw. die Leistungsauslegung entlastet ist, da der erste Spannungswandler weiteren Komponenten (wie z.B. einem vierten Spannungswandler) Leistung zur Verfügung stellen kann und der zweite Spannungswandler lediglich die Ladeenergie für die Ladevorrichtung bzw. Steuerungsströme für Kommunikationsvorrichtungen und/oder Steuerungsströme hinsichtlich des Zündens des Airbags bereitstellt. Der zweite Spannungswandler muss insbesondere nicht die Energie für das Zünden des Airbags zur Verfügung stellen. Die Energie zum Zünden des Airbags kommt aus der Energiereservevorrichtung. Somit kann die elektronische Schaltung besonders kompakt und kostengünstig sein.

Die Aufgabe wird auch durch Airbagsystem gemäß Anspruch 13 gelöst. Insbesondere wird die Aufgabe durch ein Airbagsystem umfassend einen Airbag und eine oben beschriebene elektronische Schaltung zum Zünden des Airbags gelöst.

Die Aufgabe wird auch durch ein Kraftfahrzeug gemäß Anspruch 14 gelöst. Insbesondere wird die Aufgabe durch ein Kraftfahrzeug umfassend ein oben beschriebenes Airbagsystem gelöst.

Darüber hinaus liegt der Erfindung die Aufgabe zu Grunde, ein Verfahren zum Bereitstellen einer Spannung durch eine elektronische Schaltung aufzuzeigen, das bei Unterbrechen einer Spannungsversorgung der elektronischen Schaltung besonders lange mittels der gespeicherten Energie in der Energiereservevorrichtung der elektronischen Schaltung weiteren Komponenten Spannung zur Verfügung stellen kann.

Diese Aufgabe wird durch ein Verfahren zum Bereitstellen einer Spannung durch eine elektronische Schaltung gemäß Anspruch 15 gelöst.

Insbesondere wird die Aufgabe durch ein Verfahren zum Bereitstellen einer Spannung durch eine elektronische Schaltung, insbesondere durch einen oben beschriebene elektronische Schaltung, gelöst, wobei die elektronische Schaltung zum Zünden eines Airbags ausgebildet ist, wobei bei der elektronischen Schaltung ein Ausgang eines ersten Spannungswandlers mit einem Eingang eines zweiten Spannungswandlers verbunden ist, ein Ausgang des zweiten Spannungswandlers mit einem Eingang einer Ladevorrichtung verbunden ist, ein Ausgang der Ladevorrichtung mit einer Energiereservevorrichtung zum Speichern einer Energiereserve zum Zünden des Airbags verbunden ist, und die Energiereservevorrichtung über einen Autarkieschalter mit dem Eingang des zweiten Spannungswandlers verbunden ist, wobei das Verfahren folgende Schritte umfasst: Feststellen, ob eine Spannung, die am Eingang des ersten Spannungswandlers anliegt, unterhalb eines vorgegebenen Werts liegt; und, wenn festgestellt wurde, dass die Spannung an dem Eingang des ersten Spannungswandlers unterhalb des vorgegebenen Werts liegt, Schalten des Autarkieschalters auf Durchlass, so dass die Energiereservevorrichtung mit dem Eingang des zweiten Spannungswandlers elektrisch verbunden ist, und Sperren der Ladevorrichtung.

Vorteilhaft hieran ist, dass die in der Energiereservevorrichtung der elektronischen Schaltung gespeicherte Energie für einen besonders langen Zeitraum nach Abfallen der Spannung an dem Eingang des ersten Spannungswandlers und somit auch an dem Ausgang des ersten Spannungswandlers, insbesondere durch die Bereitstellung der Versorgung durch den zweiten Spannungswandler, das Zünden des Airbags auslösen kann und/oder weitere externe Komponenten, z.B. Datenspeicher zum Speichern von Unfallinformationen und/oder Kommunikationsvorrichtungen, mit Energie versorgen kann. Hierdurch kann zudem die Energiereservevorrichtung besonders kompakt ausgestaltet werden, da die Energie der Energiereservevorrichtung besonders effizient verwendet wird. Darüber hinaus ist es möglich, dass die elektronische Schaltung eine Spannung bereitstellt, die höher als die Spannung ist, die an der Energiereservevorrichtung anliegt, vorteilhafterweise am Ausgang des zweiten Spannungswandlers. Somit kann auch nach einem Abfall der Spannung an der Energiereservevorrichtung weiterhin externen Komponenten eine ausreichende Spannung bereitgestellt werden. Wenn festgestellt wurde, dass die Spannung an dem Eingang des ersten Spannungswandlers gleich dem vorgegebenen Wert ist oder größer als der vorgegebene Wert ist, befindet sich üblicherweise der Autarkieschalter im Sperrmodus bzw. ist gesperrt. In diesem Fall ist der Sperrzustand der Ladevorrichtung typischerweise nicht mehr von der Spannung am Eingang des ersten Spannungswandlers abhängig.

Gemäß einer Ausführungsform des Verfahrens zum Starten einer elektronischen Schaltung ist in der ersten Startphase der elektronischen Schaltung die Ladevorrichtung gesperrt. Ein Vorteil hiervon ist, dass in der ersten Startphase keine Energie zu der Energiereservevorrichtung fließt, so dass die Spannungen, insbesondere die Spannung am Ausgang des ersten Spannungswandlers, besonders schnell zum Starten der elektronischen Schaltung aufgebaut werden können. In der ersten Startphase kann der zweite Spannungswandler auf Durchgang geschaltet sein. Denkbar ist auch, dass der zweite Spannungswandler in der ersten Startphase eingeschaltet ist und eine höhere Spannung an seinem Ausgang ausgibt als an seinem Eingang anliegt. Somit kann in der ersten Startphase für die Bereitstellung von z.B. Kommunikation und/oder Sensoren bereits eine ausreichende Spannung ausgegeben werden.

Gemäß einer Ausführungsform des Verfahrens zum Starten einer elektronischen Schaltung wird in der zweiten Startphase der elektronischen Schaltung der Strom am Ausgang der Ladevorrichtung derart geregelt, dass die Verlustleistung der Ladevorrichtung, insbesondere der elektronischen Schaltung, einen vorbestimmten ersten Wert nicht überschreitet. Hierdurch wird erreicht, dass die Energiereservevorrichtung besonders effizient geladen wird. Auch kann z.B. die Verlustleistung innerhalb zulässiger thermischer Betriebsgrenzen gehalten werden. Zudem wird die vorhandene Energie besonders effizient genutzt und die Entstehung von Wärme am bzw. in der Ladevorrichtung wird vermindert. Hierdurch kann die elektronische Schaltung besonders kompakt ausgebildet sein.

Gemäß einer Ausführungsform des Verfahrens zum Starten einer elektronischen Schaltung werden der zweite Spannungswandler und/oder die Ladevorrichtung in der zweiten und/oder dritten Startphase derart gesteuert, dass der zweite Spannungswert höher, insbesondere maximal 10% oder maximal 5 V höher, vorzugsweise maximal 5% oder maximal 3 V höher, besonders vorzugsweise maximal 1% oder maximal 1 V höher, als der dritte Spannungswert ist. Vorteilhaft hieran ist, dass die Leistungsverluste besonders gering sind. Hierbei können der zweite Spannungswandler und/oder die Ladevorrichtung in der zweiten und/oder dritten Startphase derart gesteuert, dass der zweite Spannungswert stets kleiner als ein vorgegebener maximaler Spannungswert ist bzw. bleibt.

Gemäß einer Ausführungsform des Verfahrens zum Starten einer elektronischen Schaltung wird in der zweiten Startphase der elektronischen Schaltung die Ladevorrichtung derart gesteuert, dass die Energiereservevorrichtung innerhalb eines Zeitraums im Wesentlichen vollständig geladen wird, der kleiner gleich einem vorgegebenen Maximalzeitwert ist. Vorteilhaft hieran ist, dass sichergestellt wird, dass die Energiereservevorrichtung, insbesondere trotz begrenzter Verlustleistung bzw. Begrenzung der maximal zulässigen Verlustleistung, zügig geladen wird, so dass kurz nach dem Starten der elektronischen Schaltung die elektronische Schaltung bereit ist, den Airbag zu zünden. Hierdurch können insbesondere gesetzliche bzw. regulatorische Vorgaben erfüllt werden.

Gemäß einer Ausführungsform des Verfahrens zum Starten einer elektronischen Schaltung wird in der dritten Startphase die Ladevorrichtung derart gesteuert, dass die Verlustleistung der Ladevorrichtung, insbesondere der elektronischen Schaltung, einen vorbestimmten zweiten Wert nicht überschreitet. Vorteilhaft hieran ist, dass die Leistungsverluste an der Ladevorrichtung niedrig sind, insbesondere durch dynamische Anpassung des Ausgangs bzw. des Spannungswerts am Ausgang des zweiten Spannungswandlers mit Bezug zur Ausgangsspannung und/oder Temperatur der Ladevorrichtung. Auf diese Weise wird eine (thermische) Überlastung der Ladevorrichtung sicher verhindert, zudem wird die Ladezeit der Energiereservevorrichtung reduziert. Zudem kann die elektronische Schaltung kompakt ausgebildet werden, da nur eine geringe Wärmemenge entsteht bzw. die reduzierte Verlustleistung der Schaltung bzw. Ladeschaltung die Leistung am Ausgang des ersten Spannungswandlers zumindest zeitweise reduziert. Neben der Ladevorrichtung kann auch der zweite Spannungswandler hierbei derart gesteuert werden, dass die Verlustleistung der Ladevorrichtung, insbesondere der elektronischen Schaltung, einen vorbestimmten zweiten Wert nicht überschreitet.

Gemäß einer Ausführungsform des Verfahrens zum Starten einer elektronischen Schaltung wird die Ladevorrichtung derart gesteuert, dass die Stromstärke am Ausgang der Ladevorrichtung abhängig von der Temperatur der elektronischen Schaltung und/oder abhängig von der Temperatur der Energiereservevorrichtung und/oder abhängig von der Temperatur der Ladevorrichtung und/oder abhängig von der Temperatur des ersten Spannungswandlers und/oder abhängig von der Temperatur des zweiten Spannungswandlers ist. Ein Vorteil dieser adaptiven Stromsteuerung ist, dass einerseits die Energiereservevorrichtung sehr schnell geladen wird und andererseits einer Überhitzung bzw. Beschädigung der Energiereservevorrichtung bzw. der elektronischen Schaltung bzw. der Ladevorrichtung sicher verhindert wird. Somit wird die Energiereservevorrichtung besonders effizient aufgeladen. Folglich kann die Energiereservevorrichtung so schnell, wie es ohne eine Schädigung der Ladevorrichtung bzw. der elektronischen Schaltung bzw. der Energiereservevorrichtung möglich ist, geladen werden.

Gemäß einer Ausführungsform der elektronischen Schaltung ist der Ausgang des zweiten Spannungswandlers mit einer Zündvorrichtung des Airbags verbunden. Vorteilhaft hieran ist, dass die elektronische Schaltung technisch besonders einfach aufgebaut ist. Zudem kann auch im Autarkiemodus der Zündvorrichtung, d.h. wenn die elektronische Schaltung bzw. der erste Spannungswandler von außerhalb nicht mehr mit einer ausreichenden Spannung versorgt wird, besonders lange zuverlässig eine ausreichende Spannung zum Zünden der Airbags zur Verfügung gestellt werden. Auch wenn die Spannung der Energiereservevorrichtung sinkt, kann der zweite Spannungswandler die Spannung erhöhen bzw. an seinem Ausgang eine höhere Spannung ausgeben, als an seinem Eingang anliegt. Auf diese Weise wird die Zündvorrichtung von der elektronischen Schaltung selbst dann noch mit einer genügend hohen Spannung versorgt, wenn an der Energiereservevorrichtung selbst keine ausreichende Spannung für eine direkte bzw. unmittelbare Versorgung der Zündvorrichtung, d.h. nicht über einen Spannungswandler, nicht mehr vorhanden ist. Somit wird die Verfügbarkeit der Funktion der Zündvorrichtung erhöht.

Gemäß einer Ausführungsform der elektronischen Schaltung ist der Ausgang des ersten Spannungswandlers mit einem vierten Spannungswandler, insbesondere einem Abwärtswandler, zum Bereitstellen einer externen Bereitstellungsspannung verbunden. Ein Vorteil der Verwendung der Ausgangsspannung des ersten Spannungswandlers als Versorgung des vierten Spannungswandlers ist, dass durch die Wahl der Spannung am Ausgang des ersten Spannungswandlers mit (gegenüber der Verwendung der Ausgangsspannungen des zweiten Spannungswandlers oder der Ladevorrichtung) reduzierten Leistungsverlusten eine externe Bereitstellungsspannung erzeugt werden kann. Da die Spannung an dem Ausgang des ersten Spannungswandlers nicht sehr hoch ist, muss die Spannung bei einem Abwärtswandler als vierten Spannungswandler nicht sehr stark erniedrigt bzw. herabgesetzt werden. Hierdurch wird besonders wenig Wärme erzeugt, wodurch die elektronische Schaltung besonders kompakt ausgebildet sein kann. Die externe Bereitstellungsspannung kann beispielsweise einem Mikrocontroller, der das Laden der Energiereservevorrichtung initiiert bzw. startet, direkt oder indirekt zur Verfügung gestellt werden bzw. der Mikrocontroller kann mit dem Ausgang des vierten Spannungswandlers elektrisch verbunden sein. Der Mikrocontroller kann den ersten Spannungswandler, den zweiten Spannungswandler und die Ladevorrichtung steuern. Auch kann der Mikrocontroller die Zündung des Airbags auslösen bzw. steuern.

Gemäß einer Ausführungsform der elektronischen Schaltung ist der Ausgang des zweiten Spannungswandlers mit einer Funktionsbaugruppe für ein Kraftfahrzeug, insbesondere mit einer PSI5-Kommunikationsvorrichtung, verbunden. Vorteilhaft hieran ist, dass die Funktionsbaugruppe, insbesondere eine Kommunikationsvorrichtung und/oder eine Steuerung einer Zündvorrichtung zum Zünden des Airbags und/oder eine Steuerung eines aus dem Stand der Technik bekannten dritten Sicherheitsschalters des Airbags, zuverlässig mit Energie bzw. Spannung versorgt werden kann. Insbesondere kann auch im Autarkiemodus, d.h. wenn der elektronischen Schaltung keine oder nicht genügende externe Energie bzw. Spannung mehr bereitgestellt wird (z.B. aufgrund eines Unfalls), die Funktionsbaugruppe, z.B. die Kommunikationsvorrichtung, durch die elektronische Schaltung mit ausreichender Spannung für deren Funktionalität versorgt werden. Folglich kann bei einem Unfall besonders lange die Kommunikation innerhalb des Kraftfahrzeugs aufrechterhalten werden. Dadurch, dass der zweite Spannungswandler die Spannung der Energiereservevorrichtung erhöhen kann bzw. erhöht, kann somit die Kommunikationsvorrichtung auch dann noch mit ausreichender Spannung versorgt werden, wenn die Spannung der Energiereservevorrichtung gering bzw. nicht mehr ausreichend ist.

Gemäß einer Ausführungsform der elektronischen Schaltung ist der Ausgang des ersten Spannungswandlers mit einer Kommunikationsvorrichtung für ein Kraftfahrzeug, insbesondere mit einer PSI5-Kommunikationsvorrichtung, verbunden. Vorteilhaft hieran ist, dass die Kommunikationsvorrichtung frühzeitig nach dem Starten der elektronischen Schaltung mit Energie bzw. Spannung versorgt werden kann.

Gemäß einer Ausführungsform des Verfahrens zum Bereitstellen einer Spannung durch eine elektronische Schaltung wird, wenn festgestellt wurde, dass die Spannung, die am Eingang des ersten Spannungswandlers anliegt, unterhalb eines vorgegebenen Werts liegt, der Wert der Spannung an dem Ausgang des zweiten Spannungswandlers auf einen anderen Wert, insbesondere einen niedrigeren Wert, als der zweite Spannungswert eingestellt, wobei der zweite Spanungswert der Wert der Spannung ist, die, wenn festgestellt wurde, dass die Spannung, die am Eingang des ersten Spannungswandlers anliegt, nicht unterhalb des vorgegebenen Werts liegt, am Ausgang des zweiten Spannungswandlers anliegt. Vorteilhaft hieran ist, dass am Ausgang des zweiten Spannungswandlers im Autarkiemodus, d.h. wenn festgestellt wurde, dass die Spannung an dem Eingang des ersten Spannungswandlers unterhalb des vorgegebenen Werts liegt, besonders lange mittels der Energie der Energiereservevorrichtung eine ausreichende Spannung zum Versorgen von Komponenten, z.B. einer Kommunikationsvorrichtung und/oder einer Zündvorrichtung zum Auslösen des Airbags, zur Verfügung gestellt werden kann. Dies bedeutet, dass durch die Anpassung des Wertes der Spannung am Ausgang des zweiten Spannungswandlers mit der Energie der Energiereservevorrichtung besonders effizient bzw. sparsam umgegangen wird, wenn festgestellt wurde, dass die Spannung an dem Eingang des ersten Spannungswandlers unterhalb des vorgegebenen Werts liegt. Der zweite Spannungswandler verstärkt im Autarkiemodus die Spannung an seinem Eingang nur soweit dies notwendig ist. Hierdurch wird ein zu großer bzw. zu schneller Energieverbrauch der Energie der Energiereservevorrichtung vermieden und Verlustleistungen in der elektronischen Schaltung reduziert.

Unter einem Spannungswandler kann insbesondere eine Vorrichtung bzw. ein Bauteil verstanden werden, die bzw. das eine Gleichspannung in eine andere Gleichspannung umwandeln kann (Gleichspannungswandler, DC/DC-Wandler). Natürlich kann ein Spannungswandler auch auf Durchgang geschaltet werden, so dass die Spannung am Eingang gleich der Spannung am Ausgang ist. Vorstellbar ist, dass der Spannungswandler an seinem Ausgang eine höhere Spannung oder eine niedrige Spannung als an seinem Eingang ausgeben kann.

Unter einer Ladevorrichtung kann insbesondere eine Stromquelle verstanden werden. Die Ladevorrichtung bzw. Stromquelle kann steuerbar sein. Möglich ist, dass die Ladevorrichtung die Spannung, die an ihrem Eingang anliegt, herabsetzt, insbesondere geringfügig (z.B. 1%, 3%, 5%, 7% oder 10%) herabsetzt, und diese herabgesetzte Spannung an ihrem Ausgang abgibt. Die Ausgangsspannung kann geregelt oder gesteuert werden. Die Ladevorrichtung kann insbesondere ein Abwärtswandler bzw. ein Tiefsetzsteller bzw. ein step-down-converter sein. Die Ladevorrichtung kann ein SEPIC (single ended primary inductance converter) und/oder ein buck-converter umfassen oder sein. Denkbar ist, dass die Ladevorrichtung ein dritter Spannungswandler sein kann.

Der vierte Spannungswandler kann insbesondere ein Abwärtswandler bzw. Tiefsetzsteller bzw. step-down-converter sein oder ein SEPIC (single ended primary inductance converter) sein.

Der erste Spannungswandler, der zweite Spannungswandler, die Ladevorrichtung und der Autarkieschalter können Teil eines integrierten Schaltkreises sein. Der vierte Spannungswandler kann auch Teil des integrierten Schaltkreises sein. Möglich ist, dass Teile des ersten Spannungswandlers, des zweiten Spannungswandlers, der Ladevorrichtung, des Autarkieschalters und/oder des vierten Spannungswandlers Teil eines integrierten Schaltkreises sind, während weitere Teile bzw. Komponenten hiervon (z.B. Spulen und/oder Induktivitäten) nicht Teil des integrierten Schaltkreises sind.

Das Starten bzw. die drei Startphasen der elektronischen Schaltung können insbesondere dann ausgeführt werden, wenn die elektronische Schaltung gestartet wird bzw. mit einer Versorgungsspannung am Eingang des ersten Spannungswandlers versorgt wird (nachdem vorher keine Versorgungsspannung am Eingang des ersten Spannungswandlers anlag). Dies kann insbesondere stattfinden, wenn das Kraftfahrzeug bzw. die Elektronik des Kraftfahrzeugs gestartet wird.

Der Startzeitpunkt des vierten Spannungswandlers, d.h. der Zeitpunkt, an dem der vierte Spannungswandler eingeschaltet wird, ist dabei bevorzugt unabhängig vom Beginn der zweiten Startphase und unabhängig vom Beginn der dritten Startphase. Vorteilhafterweise liegt der Startzeitpunkt des vierten Spannungswandlers in der ersten Startphase bzw. wird der vierte Spannungswandler während der ersten Startphase gestartet.

Unter Verlustleistung kann insbesondere Leistung verstanden werden, die vom jeweiligen Bauteil, z.B. dem Spannungswandler, aufgenommen wird, die aber nicht in Form von elektrischer Leistung abgegeben wird, sondern beispielsweise in Form von Wärme abgegeben wird.

Die Energiereservevorrichtung kann einen Kondensator umfassen oder kann ein Kondensator sein. Unter dem Begriff "im Wesentlichen vollständig geladen" in Bezug auf die Energiereservevorrichtung kann verstanden werden, dass die maximal speicherbare Energie in der Energiereservevorrichtung vorhanden ist, z.B. 99,9%, 99,0% oder 95,0% der maximal speicherbaren Energie. Beispielsweise ist der Kondensator im Wesentlichen vollständig geladen, wenn 99,9%, 99,0% oder 95,0% des maximalen Kapazitätswerts im Kondensator vorhanden ist.

Unter einem Autarkieschalter kann insbesondere ein Schalter verstanden werden, der aus einem sperrenden Zustand heraus eingeschaltet oder auf Durchgang geschaltet wird, wenn die Versorgungsspannung der elektronischen Schaltung, die von extern (z.B. der Batterie des Kraftfahrzeugs) der elektronischen Schaltung zur Verfügung gestellt wird, unter einen vorbestimmten Wert fällt oder auf (nahezu) Null abfällt. In diesem Fall muss von einer physischen Unterbrechung (z.B. Abriss) der Batterie oder der Versorgungsleitung zu der elektronischen Schaltung oder einem Ausfall der Batterie ausgegangen werden. Diesen Zustand nennt man auch Autarkiemodus. D.h. im Autarkiemodus wird die elektronische Schaltung nicht mehr bzw. nicht mehr ausreichend von außen mit Energie bzw. Spannung versorgt, sondern die Energiereservevorrichtung muss die elektronische Schaltung bzw. Teile hiervon mit Energie bzw. Spannung versorgen.

Die Temperatur der elektronischen Schaltung kann an einer bestimmten Stelle erfasst werden. Möglich ist auch, dass an mehreren Stellen der elektronischen Schaltung die Temperatur erfasst wird und die Temperatur der elektronischen Schaltung als Durchschnitt oder gewichteter Durchschnitt der erfassten Temperaturen bestimmt wird.

Unter Zündvorrichtung oder Steuerung einer Zündung kann insbesondere eine Konstellation aus zwei Leistungsschaltern (sogenannten High- und Lowside-Schaltern) ober- und unterhalb eines Zündelementes, beispielsweise einer Zündpille oder induktiven Zündungsmechanismus (sogenannte low-energy actuator, kurz LEA), sowie die Ansteuerung dieser Leistungsschalter verstanden werden.

Unter einem dritten Sicherheitsschalter kann insbesondere eine Anordnung bestehend aus einem dritten Leistungsschalter, angeordnet in Reihe mit den zwei Leistungsschaltern der Zündvorrichtung sowie dem Zündelement, in Kombination mit der entsprechenden Ansteuerung dieses dritten Leistungsschalters verstanden werden. Dieser dritte Sicherheitsschalter ist insbesondere dazu geeignet, eine unbeabsichtigte Bereitstellung von Zündenergie in das Zündelement redundant zu vermeiden. Da dieser dritte Sicherheitsschalter insbesondere als Leistungstransistor mit einer Schwellspannung realisiert werden kann, ist es von Vorteil, eine Spannung oberhalb der Spannung der Energiereservevorrichtung zwecks der Ansteuerung des Leistungshalbleiters bereitzustellen.

Unter einer PSI5-Kommunikationsvorrichtung kann insbesondere eine Kommunikationsvorrichtung verstanden werden, die eine PSI5-Schnittstelle (Peripheral Sensor Interface 5; deutsch: "periphere Sensorschnittstelle 5") aufweist.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine schematische Ansicht einer ersten Ausführungsform der erfindungsgemäßen elektronischen Schaltung;
- Fig. 2: eine schematische Ansicht einer zweiten Ausführungsform der erfindungsgemäßen elektronischen Schaltung; und
- Fig. 3: einen schematischen Ablauf der Startphasen der erfindungsgemäßen elektronischen Schaltung.

Bei der nachfolgenden Beschreibung werden für gleiche und gleich wirkende Teile dieselben Bezugsziffern verwendet.

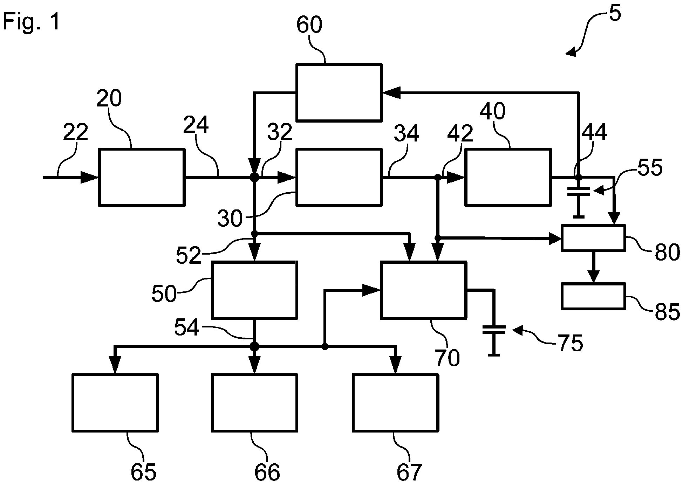

Fig. 1 zeigt eine schematische Ansicht einer ersten Ausführungsform der erfindungsgemäßen elektronischen Schaltung 5. Die elektronische Schaltung 5 ist zum Zünden eines Airbags 85 ausgebildet. Die elektronische Schaltung 5 kann in einem Kraftfahrzeug, z.B. einem PKW, LKW, Motorrad oder Bus, angeordnet sein.

Die elektronische Schaltung 5 umfasst einen ersten Spannungswandler 20, einen zweiten Spannungswandler 30 und eine Ladevorrichtung 40. Der Eingang 22 des ersten Spannungswandlers 20 ist mit einer Spannungsversorgung, z.B. einer Batterie, verbunden bzw. kann beim Starten des Kraftfahrzeugs elektrisch mit der Batterie verbunden werden. Der Ausgang 24 des ersten Spannungswandlers 20 ist mit dem Eingang 32 des zweiten Spannungswandlers 30 verbunden. Der Ausgang 34 des zweiten Spannungswandlers 30 ist mit dem Eingang 42 einer Ladevorrichtung 40 verbunden.

Die elektronische Schaltung 5 umfasst eine Energiereservevorrichtung 55. Vorstellbar ist auch, dass die elektronische Schaltung 5 mehr als eine Energiereservevorrichtung 55, z.B. zwei oder drei Energiereservevorrichtungen, aufweist. Die Energiereservevorrichtung 55 ist mit dem Ausgang 44 der Ladevorrichtung 40 elektrisch verbunden. Die Energiereservevorrichtung 55 kann zum Beispiel ein Kondensator umfassen oder sein.

Der Ausgang 44 der Ladevorrichtung 40 ist über einen schaltbaren Autarkieschalter 60 mit dem Ausgang 24 des ersten Spannungswandlers 20 bzw. mit dem Eingang 32 des zweiten Spannungswandlers 30 verbunden. Der Autarkieschalter 60 kann auf Durchgang bzw. auf Sperrung geschaltet werden. Die Energiereservevorrichtung 55 ist somit über den Autarkieschalter 60 ebenfalls mit dem Ausgang 24 des ersten Spannungswandlers 20 bzw. mit dem Eingang 32 des zweiten Spannungswandlers 30 verbunden.

Der Ausgang 24 des ersten Spannungswandlers 20 bzw. der Eingang 32 des zweiten Spannungswandlers 30 ist mit einem vierten Spannungswandler 50 verbunden. Der vierte Spannungswandler 50 kann insbesondere ein Tiefsetzsteller bzw. Abwärtswandler sein. Der vierte Spannungswandler 50 stellt externen Komponenten 65-67 bzw. Bauteilen eine Spannung bzw. Energie zur Verfügung. Eine dieser externen Komponenten 65-67 kann ein Mikrocontroller sein, der die Zündung des Airbags 85 und/oder die Aufladung der Energiereservevorrichtung 55 steuert. Der Mikrocontroller kann die Spannungswandler 20, 30, 40, 50 der elektronischen Schaltung 5 steuern. Der Ausgang 54 des vierten Spannungswandlers 50 weist einen vierten Spannungswert auf, wenn der Ausgang 24 des ersten Spannungswandlers 20 den ersten Spannungswert aufweist. Eine weitere Möglichkeit ist, dass die externen Komponenten 65-67 Sensorvorrichtungen für eine Sitzbelegung des Kraftfahrzeugs und/oder für die Unfallerkennung und/oder für die Erfassung einer Temperatur und/oder weitere Spannungswandler umfassen oder sind.

Der Eingang 32 des zweiten Spannungswandlers 30 kann mit einer Kommunikationsvorrichtung 70, insbesondere einer PSI5-Kommunikationsvorrichtung, verbunden sein. Der Ausgang 54 des vierten Spannungswandlers 50 kann auch alternativ oder zusätzlich mit der PS15-Kommunikationsvorrichtung 70 verbunden sein. Der Ausgang 34 des zweiten Spannungswandlers 34 kann auch mit der Kommunikationsvorrichtung 70 verbunden sein.

Die Zündvorrichtung 80 des Airbags 85 ist sowohl mit der Energiereservevorrichtung 55 als auch mit dem Eingang der PSI5-Kommunikationsvorrichtung 70 und/oder mit dem Ausgang 34 des zweiten Spannungswandlers 30 und/oder mit dem Eingang 32 des zweiten Spannungswandlers 30 verbunden. Die Zündvorrichtung 80 des Airbags 85 kann einen MOSFET aufweisen. Die Zündvorrichtung 80 kann auch mit dem Eingang 22 des ersten Spannungswandlers 20 verbunden sein.

Der Autarkieschalter 60, der die Energiereservevorrichtung 55 mit dem Eingang 32 des zweiten Spannungswandlers 30 verbinden kann, ist im Normalzustand, d.h. wenn die Versorgungsspannung an dem Eingang 22 des ersten Spannungswandlers 20 anliegt, gesperrt.

Die Spannung, die von dem ersten Spannungswandler 20 ausgegeben wird bzw. am Ausgang 24 des ersten Spannungswandlers 20 anliegt, (erster Spannungswert) ist einerseits hoch genug, um auch bei Schwankungen der Versorgungsspannung möglichst stabil zu bleiben und um die weiteren Komponenten mit ausreichender Spannung zu versorgen, und andererseits niedrig genug, um die Verlustleistung der elektronischen Schaltung durch reduzierte Wandlungsverhältnisse zwischen Ein- und Ausgang möglichst gering zu halten. Der erste Spannungswert kann variabel bzw. veränderlich sein.

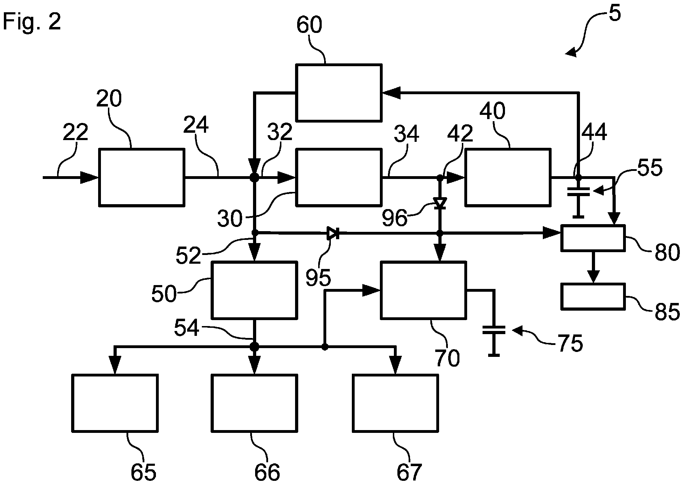

Fig. 2 zeigt eine schematische Ansicht einer zweiten Ausführungsform der erfindungsgemäßen elektronischen Schaltung.

Die zweite Ausführungsform unterscheidet sich von der ersten Ausführungsform in folgenden Aspekten:
Zwischen dem Eingang 32 des zweiten Spannungswandlers 30 und der Kommunikationsvorrichtung 70 ist eine erste Diode 95 angeordnet, die ihre Durchlassrichtung von dem Eingang 32 des zweiten Spannungswandlers 30 zur PSI5-Kommunikationsvorrichtung 70 aufweist. Der Eingang 42 der Ladevorrichtung 40 bzw. der Ausgang 34 des zweiten Spannungswandlers 30 ist mit der PSI5-Kommunikationsvorrichtung 70 verbunden. Zwischen dem Eingang 42 der Ladevorrichtung 40 bzw. dem Ausgang 34 des zweiten Spannungswandlers 30 und der PSI5-Kommunikationsvorrichtung 70 ist eine zweite Diode 96 angeordnet. Die zweite Diode 96 weist ihre Durchlassrichtung von dem Eingang 42 der Ladevorrichtung 40 zur PSI5-Kommunikationsvorrichtung 70 auf.

Hierdurch ist sowohl die Zündvorrichtung 80 des Airbags 85 als auch die Kommunikationsvorrichtung 70 durch zwei Spannungsquellen versorgt bzw. an zwei Spannungen angeschlossen. Dies erhöht die Zuverlässigkeit der Spannungsversorgung.

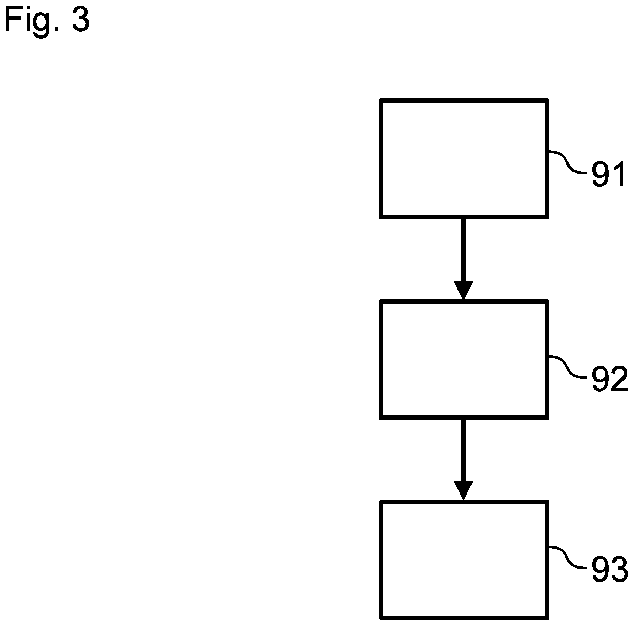

Fig. 3 zeigt einen schematischen Ablauf der Startphasen 91, 92, 93 der erfindungsgemäßen elektronischen Schaltung 5.

Der Ablauf der Startphasen kann bei einer elektronischen Schaltung 5 gemäß der ersten Ausführungsform oder gemäß der zweiten Ausführungsform oder auch bei einer anders aufgebauten elektronischen Schaltung stattfinden.

Beim bzw. zum Starten der elektronischen Schaltung 5, d.h. wenn eine Spannung bzw. die Versorgungsspannung an den Eingang 22 des ersten Spannungswandlers 20 und/oder ein entsprechendes Steuersignal zum Aufwachen der elektronischen Schaltung angelegt wird, wird das Verfahren zum Starten der elektronischen Schaltung 5 gestartet bzw. die elektronische Schaltung 5 wird gestartet. Das Verfahren zum Starten der elektronischen Schaltung 5 umfasst eine erste Startphase 91, anschließend eine zweite Startphase 92 und danach anschließend eine dritte Startphase 93.

In der ersten Startphase 91 fährt der erste Spannungswandler 20 hoch, d.h. der erste Spannungswandler 20 verstärkt die an seinem Eingang 22 anliegende (Versorgungs-)Spannung und gibt eine Spannung mit einem ersten Spannungswert aus. Dieser erste Spannungswert wird derart gewählt, dass einerseits die Spannung hoch genug ist, um auch bei Änderungen der Spannung am Eingang 22 des ersten Spannungswandlers 20 stabil gehalten zu werden und den zweiten Spannungswandler 30 und/oder den vierten Spannungswandler 50 mit einer ausreichenden Spannung bzw. mit einer Spannung, die für deren Funktionalität ausreichend ist, zu versorgen. Gleichzeitig wird der erste Spannungswert derart niedrig gewählt, dass die Verlustleistung des integrierten Schaltkreises 5 bzw. des ersten Spannungswandlers 20 sowie des vierten Spannungswandlers 50 möglichst gering ist.

Die Ladevorrichtung 40 bleibt in der ersten Startphase 91 gesperrt, d.h. es fließt kein Strom von dem ersten Spannungswandler 20 zu der Energiereservevorrichtung 55. Somit steht den externen Komponenten 65-67 früher ausreichende Spannung zur Verfügung im Vergleich zu der Situation, in der die Energiereservevorrichtung 55 in der ersten Startphase 91 bereits geladen würde. Am Ende der ersten Startphase 91 ist der Mikrocontroller, der über den vierten Spanungswandler 50 mit Spannung versorgt wird, die Zündvorrichtung 80 des Airbags 85 und die PSI5-Kommunikationsvorrichtung 70 mit ausreichender Spannung für deren volle Funktionalität versorgt. Der Mikrocontroller wird gestartet und führt die Initialisierung des Mikrocontrollers sowie die Initialisierung und Diagnose des Airbagsystems durch. In der ersten Startphase 91 kann der zweite Spannungswandler 30 auf Durchgang geschaltet sein. Die Kommunikationsvorrichtung 70 ist mit einem Synchronisierungs-Kondensator 75 verbunden, der Energie für Synchronisierungspulse speichert und zur Verfügung stellt.

Nach der ersten Startphase 91 beginnt die zweite Startphase 92. In der zweiten Startphase 92 kann der zweite Spannungswandler 30 auf Durchgang gehalten werden, d.h. er verstärkt nicht die Spannung an seinem Eingang 32, sondern die Spannung an seinem Ausgang 34 ist im Wesentlichen die Spannung an seinem Eingang 32, insbesondere bei Verwendung eines Hochsetzstellers bzw. Boostkonverters als zweiten Spannungswandler 30. Es ist möglich, dass der zweite Spannungswandler 30 in der zweiten Startphase 91 eine etwas höhere Spannung (z. B. 1%, 3%, 5% oder 10% höher bzw. ca. 1 V, ca. 3 V oder ca. 5 V höher) ausgibt, als an der Energiereservevorrichtung 55 anliegt bzw. vorhanden ist. Die Ladevorrichtung 40 wird eingeschaltet. Die Ladevorrichtung 40 bzw. der Strom am Ausgang 44 der Ladevorrichtung 40 wird adaptiv eingestellt, so dass die Verlustleistung der elektronischen Schaltung 5 oder der Ladevorrichtung 40 kleiner als ein erster vorgegebener Wert ist und dennoch sichergestellt ist, dass der Zeitraum bis zur vollständigen Ladung der Energiereservevorrichtung 55 einen ersten vorgegebenen Zeitwert bzw. einen vorgegebenen Maximalzeitwert (z.B. 2 Sekunden oder 3 Sekunden) nicht überschreitet. Auf diese Weise werden Verlustleistungsspitzen vermieden bzw. verringert. Dies erhöht die Langlebigkeit und Zuverlässigkeit der elektronischen Schaltung 5 und ermöglicht den Schaltkreis 5 nahe seiner zulässigen Temperaturgrenzen, aber nicht außerhalb seiner zulässigen Temperaturgrenzen, zu betreiben. Am Ende der zweiten Startphase 92 ist die Energiereservevorrichtung 55 auf die Spannung des ersten Spannungswerts, d.h. auf die Spannung am Ausgang 24 des ersten Spannungswandlers 20 bzw. die Spannung am Ausgang 34 des zweiten Spannungswandlers 30 (da der zweite Spannungswandler 30 auf Durchgang gehalten werden kann), geladen. Möglich ist auch, dass am Ende der zweiten Startphase 92 die Energiereservevorrichtung 55 auf mindestens 90%, vorzugsweise mindestens 95%, besonders vorzugsweise mindestens 99%, der Spannung des ersten Spannungswerts, d.h. auf mindestens 90%, vorzugsweise mindestens 95%, besonders vorzugsweise mindestens 99%, der Spannung am Ausgang 24 des ersten Spannungswandlers 20 bzw. der Spannung am Ausgang 34 des zweiten Spannungswandlers 30, geladen ist.

Anschließend folgt die dritte Startphase 93. In der dritten Startphase 93 wird der zweite Spannungswandler 30 aktiviert bzw. eingeschaltet und verstärkt die Spannung an seinem Eingang 32. Insbesondere verstärkt in der dritten Startphase 93 der zweite Spannungswandler 30 die Spannung an seinem Eingang nicht nur geringfügig, d.h. mehr als 1 %, mehr als 3%, mehr als 5% oder mehr als 10% bzw. mehr als ca. 1 V, ca. 3 V oder ca. 5 V. Die Spannung am Ausgang 34 des zweiten Spannungswandlers 30 fährt nun nach oben bzw. steigt an und gleichzeitig erhöht sich die Spannung am Ausgang 44 der Ladevorrichtung 40. Am Ausgang 44 der Ladevorrichtung 40 liegt am Ende der dritten Startphase 93 ein dritter Spannungswert an. Der dritte Spannungswert ist höher als der erste Spannungswert.

Der dritte Spannungswert ist typischerweise niedriger als der zweite Spannungswert. Dies bedeutet, dass die Spannung über die Ladevorrichtung 40 abfällt. Dies gilt üblicherweise während der Ladung der Energiereservevorrichtung 55. Am Ende der dritten Startphase kann der dritte Spannungswert gleich oder nahezu gleich zu dem zweiten Spannungswert sein bzw. der Wert der Spannung am Eingang 42 der Ladevorrichtung 40 kann nahezu gleichgroß oder im Wesentlichen gleichgroß oder identisch zu dem Wert der Spannung am Ausgang 44 der Ladevorrichtung 40 sein.

Die Stromstärke am Ausgang 44 der Ladevorrichtung 40 kann abhängig von der Temperatur der Ladevorrichtung 40 und/oder abhängig von der Temperatur der elektronischen Schaltung 5 und/oder abhängig von der Temperatur der Energiereservevorrichtung 55 und/oder abhängig von der Temperatur des ersten Spannungswandler 20 bzw. des zweiten Spannungswandlers 30 gesteuert bzw. geregelt werden. Wenn die Temperatur unterhalb eines ersten vorgegebenen Temperaturwerts liegt, kann eine hohe Stromstärke am Ausgang 44 der Ladevorrichtung 40 eingestellt werden. Bei einer Temperatur größer gleich dem ersten Temperaturwert kann die Stromstärke am Ausgang 44 der Ladevorrichtung 40 verringert werden bzw. geringer eingestellt werden. Möglich ist, dass es mehrere Temperaturschwellenwerte gibt und die Stromstärke abhängig hiervon auf diskrete Werte eingestellt wird. Denkbar ist auch, dass eine lineare Beziehung zwischen der Temperatur und der Stromstärke eingestellt wird. Möglich ist hierbei auch ein Proportionalitätsfaktor, der eine Beziehung zwischen der aktuellen Temperatur und der maximal erlaubten bzw. einem vorgegebenen Maximalwert zur Einstellung des Stroms bzw. der Stromstärke am Ausgang 44 der Ladevorrichtung 40 verwendet. Auf diese Weise wird eine zu hohe thermische Belastung, die zu einer Schädigung und/oder einer Verkürzung der Lebenszeit der elektronischen Schaltung 5 bzw. einer seiner Komponenten führen könnte, zuverlässig verhindert. Gleichzeitig wird durch diese adaptive Stromsteuerung dafür gesorgt, dass die Energiereservevorrichtung 55 in möglichst kurzer Zeit vollständig mit Energie aufgeladen wird.

Der Spannungsabfall über die Ladevorrichtung 40 wird derart gesteuert, dass dieser möglichst gering ist, so dass Leistungsverluste an der Ladevorrichtung 40 weitestgehend vermieden werden und eine Überlastung der Ladevorrichtung 40 vermieden werden.

Nun ist die dritte Startphase 93 beendet und der Startvorgang der elektronischen Schaltung 5 ist abgeschlossen.

Im normalen Betrieb der elektronischen Schaltung 5, z.B. nach dem Durchlaufen der drei Startphasen oder auch bereits währenddessen, wird die Spannung an dem Eingang 22 des ersten Spannungswandlers 20 überwacht bzw. wiederholt erfasst. Diese kann beispielsweise durch den Mikrocontroller und/oder die elektronische Schaltung 5 durchgeführt werden. Der Mikrocontroller kann kein Teil der elektronischen Schaltung 5 sein, d.h. der Mikrocontroller kann in Bezug auf die elektronische Schaltung 5 ein externes Element sein. Denkbar ist auch, dass der Mikrocontroller Teil der elektronischen Schaltung ist. Da die Spannung am Eingang 22 des ersten Spannungswandlers 20 unbeeinflusst von der Energiereservevorrichtung 55 ist, d.h. auch im Autarkiemodus wird die Energiereservevorrichtung 55 nicht mit dem Eingang 22 des ersten Spannungswandlers 20 verbunden (sondern mit dem Ausgang 24 des ersten Spannungswandlers 20), kann die Spannung am Eingang 22 des ersten Spannungswandlers 20 besonders zuverlässig überwacht werden und es kann besonders präzise festgestellt werden, ob die Spannung am Eingang 22 des ersten Spannungswandlers 20 kleiner gleich dem ersten vorgegebenen Spannungswert ist.

Falls die Spannung am Eingang 22 des ersten Spannungswandlers 20 unterhalb eines ersten vorgegebenen Werts fällt oder diesen erreicht, z.B. durch Abriss der Leitung von der Batterie zu dem Eingang 22 des ersten Spannungswandlers 20 beispielsweise durch einen Unfall, wird die elektronische Schaltung 5 in den Autarkiemodus versetzt. Dies ist unabhängig von dem Starten bzw. den drei Startphasen der elektronischen Schaltung 5 und unterbricht gegebenenfalls den Ablauf der drei Startphasen. In dem Autarkiemodus wird der Autarkieschalter 60 auf Durchgang geschaltet, so dass die Spannung am Eingang 32 des zweiten Spannungswandlers 30 von dem ersten Spannungswert bevorzugt auf den dritten Spannungswert steigt, der an der Energiereservevorrichtung 55 vorhanden ist. Im Autarkiemodus wird die Ladevorrichtung 40 gesperrt. Hierdurch wird ein Kreislauf der Energie aus der Energiereservevorrichtung 55 sowie die daraus typischerweise resultierende Verlustleistung verhindert. Der zweite Spannungswandler 30 bleibt im Autarkiemodus eingeschaltet bzw. aktiv. Möglich ist, dass die Spannung am Ausgang 34 des zweiten Spannungswandlers 30 gegenüber dem Normalmodus abgesenkt wird, d.h. dass der zweite Spannungswandler 30 derart gesteuert wird, dass die Spannung am Ausgang 34 des zweiten Spannungswandlers 30 von dem zweiten Spannungswert (der am Ausgang des zweiten Spannungswandlers 30 anliegt, während die Spannung am Eingang des ersten Spannungswandlers 20 oberhalb des ersten vorgegebenen Werts liegt) auf einen niedrigeren Wert absinkt. Dieser niedrigere Wert ist dennoch ausreichend hoch, um z.B. sowohl die PSI5-Kommunikationsvorrichtung 70 mit ausreichender Spannung als auch die Zündvorrichtung 80 mit ausreichender Spannung zu versorgen.

Sobald mit Überschreiten eines ersten vorgegebenen Werts der Eingangsspannung 22 am ersten Spannungswandler 20 der Autarkiebetrieb beendet wird, tritt die elektronische Schaltung 5 wieder in Ablauf der Startphasen ein, bevorzugt beginnend mit in der zweiten Startphase. Diese zweite Startphase kann zugunsten der dritten Startphase übersprungen werden, sofern der Wert der Spannung der Energiereservevorrichtung 55 die beschriebenen Voraussetzungen für den Eintritt in die dritte Startphase erfüllt, d.h. insbesondere die Spannung an der Energiereservevorrichtung 55 dem ersten Spannungswert entspricht. Dies kann durch den Mikrocontroller gesteuert werden.

Im Autarkiemodus wird dafür gesorgt, dass auch bei abnehmender Energie in der Energiereservevorrichtung 55, die nun den Mikrocontroller, die PSI5-Kommunikationsvorrichtung 70 und die Zündvorrichtung 80 mit Energie versorgen muss, die wichtigsten Funktionen erhalten bleiben. Diese können ebenfalls die Speicherung von Informationen des Kraftfahrzeugs während eines Unfalls und gegebenenfalls unmittelbar nach einem Unfall beinhalten. Hierzu kann z.B. ein Frequenz-Derating der Kommunikationsvorrichtung 70 durchgeführt werden. Alternativ oder zusätzlich können nicht notwendige Funktionen in Standby geschaltet oder abgeschaltet werden. Auf diese Weise wird der Stromverbrauch bzw. Energieverbrauch minimiert, so dass die in der Energiereservevorrichtung 55 gespeicherte Energie möglichst lange die sicherheitsrelevante Funktionalität des Mikrocontrollers, der PSI5-Kommunikationsvorrichtung 70 und der Zündvorrichtung 80 des Airbags 85 erhält.

### Bezugszeichenliste

- 5: elektronische Schaltung
- 20: erster Spannungswandler
- 22: Eingang des ersten Spannungswandlers
- 24: Ausgang des ersten Spannungswandlers
- 30: zweiter Spannungswandler
- 32: Eingang des zweiten Spannungswandlers
- 34: Ausgang des zweiten Spannungswandlers
- 40: Ladevorrichtung
- 42: Eingang der Ladevorrichtung
- 44: Ausgang der Ladevorrichtung
- 50: vierter Spannungswandler
- 52: Eingang des vierten Spannungswandlers
- 54: Ausgang des vierten Spannungswandlers
- 55: Energiereservevorrichtung (Kondensator)
- 60: Autarkieschalter
- 65: erste externe Komponente
- 66: zweite externe Komponente
- 67: dritte externe Komponente
- 70: Kommunikationsvorrichtung
- 75: Kondensator für Kommunikationsvorrichtung
- 80: Zündvorrichtung für den Airbag
- 85: Airbag
- 91: erste Startphase
- 92: zweite Startphase
- 93: dritte Startphase
- 95: erste Diode
- 96: zweite Diode

## Patentansprüche

1. Verfahren zum Starten einer elektronischen Schaltung (5) für ein Airbagsystem, wobei die elektronische Schaltung (5) zum Zünden eines Airbags (85) des Airbagsystems ausgebildet ist, wobei bei der elektronischen Schaltung (5) ein Ausgang (24) eines ersten Spannungswandlers (20) mit einem Eingang (32) eines zweiten Spannungswandlers (30) verbunden ist, ein Ausgang (34) des zweiten Spannungswandlers (30) mit einem Eingang (42) einer Ladevorrichtung (40) verbunden ist, und ein Ausgang (44) der Ladevorrichtung (40) mit einer Energiereservevorrichtung (55) zum Speichern einer Energiereserve zum Zünden des Airbags (85) verbunden ist,
wobei das Verfahren folgende Schritte umfasst:
Anlegen einer Versorgungsspannung an den Eingang (22) des ersten Spannungswandlers (20);
Steuern des ersten Spannungswandlers (20) in einer ersten Startphase (91) der elektronischen Schaltung (5) derart, dass der erste Spannungswandler (20) einen ersten Spannungswert ausgibt;
Steuern der Ladevorrichtung (40) in einer zweiten Startphase (92) der elektronischen Schaltung (5) derart, dass die Energiereservevorrichtung (55) auf zumindest ca. 90%, insbesondere zumindest ca. 95%, vorzugsweise zumindest ca. 99%, besonders vorzugsweise ca. 100%, des ersten Spannungswerts gebracht wird; und
Steuern des zweiten Spannungswandlers (30) in einer dritten Startphase (93) der elektronischen Schaltung (5) derart, dass ein zweiter Spannungswert, der höher als der erste Spannungswert ist, an dem Ausgang (34) des zweiten Spannungswandlers (30) anliegt, und am Ausgang (44) der Ladevorrichtung (40) ein dritter Spannungswert, der höher als der erste Spannungswert ist, anliegt.

2. Verfahren nach Anspruch 1, wobei
in der ersten Startphase (91) der elektronischen Schaltung (5) die Ladevorrichtung (40) gesperrt ist.

3. Verfahren nach Anspruch 1 oder Anspruch 2, wobei
in der zweiten Startphase (92) der elektronischen Schaltung (5) der Strom am Ausgang (44) der Ladevorrichtung (40) derart geregelt wird, dass die Verlustleistung der Ladevorrichtung (40), insbesondere der elektronischen Schaltung (5), einen vorbestimmten ersten Wert nicht überschreitet.

4. Verfahren nach einem der Ansprüche 1-3, wobei
der zweite Spannungswandler (30) und/oder die Ladevorrichtung (40) in der zweiten und/oder dritten Startphase derart gesteuert werden, dass der zweite Spannungswert höher, insbesondere maximal 10% höher oder maximal 5 V höher, vorzugsweise maximal 5% oder maximal 3 V höher, besonderes vorzugsweise maximal 1% oder maximal 1 V höher, als der dritte Spannungswert ist.

5. Verfahren nach einem der vorhergehenden Ansprüche, wobei
in der zweiten Startphase (92) der elektronischen Schaltung (5) die Ladevorrichtung (40) derart gesteuert wird, dass die Energiereservevorrichtung (55) innerhalb eines Zeitraums im Wesentlichen vollständig geladen wird, der kleiner gleich einem vorgegebenen Maximalzeitwert ist.

6. Verfahren nach einem der vorhergehenden Ansprüche, wobei
in der dritten Startphase (93) die Ladevorrichtung (40) derart gesteuert wird, dass die Verlustleistung der Ladevorrichtung (40), insbesondere der elektronischen Schaltung (5), einen vorbestimmten zweiten Wert nicht überschreitet.

7. Verfahren nach einem der vorhergehenden Ansprüche, wobei
die Ladevorrichtung (40) derart gesteuert wird, dass die Stromstärke am Ausgang (44) der Ladevorrichtung (40) abhängig von der Temperatur der elektronischen Schaltung (5) und/oder abhängig von der Temperatur der Energiereservevorrichtung (55) und/oder abhängig von der Temperatur der Ladevorrichtung (40) und/oder abhängig von der Temperatur des ersten Spannungswandlers (20) und/oder abhängig von der Temperatur des zweiten Spannungswandlers (30) ist.

8. Elektronische Schaltung (5) zum Zünden eines Airbags (85), wobei die elektronische Schaltung (5) folgendes umfasst:
einen ersten Spannungswandler (20),
einen zweiten Spannungswandler (30),
eine Ladevorrichtung (40),
eine Energiereservevorrichtung (55) zum Speichern einer Energiereserve zum Zünden des Airbags (85),
wobei der Ausgang (24) des ersten Spannungswandlers (20) mit einem Eingang (32) des zweiten Spannungswandlers (30) verbunden ist,
wobei ein Ausgang (34) des zweiten Spannungswandlers (30) mit einem Eingang (42) der Ladevorrichtung (40) verbunden ist,
wobei ein Ausgang (44) der Ladevorrichtung (40) mit der Energiereservevorrichtung (55) verbunden ist, und
wobei die Energiereservevorrichtung (55) über einen Autarkieschalter (60) mit dem Ausgang (24) des ersten Spannungswandlers (20) verbunden ist.

9. Elektronische Schaltung (5) nach Anspruch 8, wobei
der Ausgang (34) des zweiten Spannungswandlers (30) mit einer Zündvorrichtung (80) des Airbags (85) verbunden ist.

10. Elektronische Schaltung (5) nach Anspruch 8 oder Anspruch 9, wobei
der Ausgang (24) des ersten Spannungswandlers (20) mit einem vierten Spannungswandler (50), insbesondere einem Abwärtswandler, zum Bereitstellen einer externen Bereitstellungsspannung verbunden ist.

11. Elektronische Schaltung (5) nach einem der Ansprüche 8-10, wobei
der Ausgang (34) des zweiten Spannungswandlers (30) mit einer Kommunikationsvorrichtung (70) für ein Kraftfahrzeug, insbesondere mit einer PSI5-Kommunikationsvorrichtung, verbunden ist.

12. Elektronische Schaltung (5) nach einem der Ansprüche 8-11, wobei
der Ausgang (24) des ersten Spannungswandlers (20) mit einer Kommunikationsvorrichtung (70) für ein Kraftfahrzeug, insbesondere mit einer PSI5-Kommunikationsvorrichtung, verbunden ist.

13. Airbagsystem umfassend
einen Airbag (85), und
eine elektronische Schaltung (5) zum Zünden des Airbags (85) nach einem der Ansprüche 8-12.

14. Kraftfahrzeug umfassend
ein Airbagsystem nach Anspruch 13.

15. Verfahren zum Bereitstellen einer Spannung durch eine elektronische Schaltung (5), insbesondere durch eine elektronische Schaltung (5) nach einem der Ansprüche 8-12, wobei die elektronische Schaltung (5) zum Zünden eines Airbags (85) ausgebildet ist,
wobei bei der elektronischen Schaltung (5) ein Ausgang (24) eines ersten Spannungswandlers (20) mit einem Eingang (32) eines zweiten Spannungswandlers (30) verbunden ist, ein Ausgang (34) des zweiten Spannungswandlers (30) mit einem Eingang (42) einer Ladevorrichtung (40) verbunden ist, ein Ausgang (44) der Ladevorrichtung (40) mit einer Energiereservevorrichtung (55) zum Speichern einer Energiereserve zum Zünden des Airbags (85) verbunden ist, und die Energiereservevorrichtung (55) über einen Autarkieschalter (60) mit dem Eingang (32) des zweiten Spannungswandlers (30) verbunden ist,
wobei das Verfahren folgende Schritte umfasst:
Feststellen, ob eine Spannung, die am Eingang (22) des ersten Spannungswandlers (20) anliegt, unterhalb eines vorgegebenen Werts liegt; und,
wenn festgestellt wurde, dass die Spannung an dem Eingang (22) des ersten Spannungswandlers (20) unterhalb des vorgegebenen Werts liegt, Schalten des Autarkieschalters (60) auf Durchlass, so dass die Energiereservevorrichtung (55) mit dem Eingang (32) des zweiten Spannungswandlers (30) elektrisch verbunden ist, und Sperren der Ladevorrichtung (40).

16. Verfahren nach Anspruch 15, wobei,
wenn festgestellt wurde, dass die Spannung, die am Eingang (22) des ersten Spannungswandlers (20) anliegt, unterhalb eines vorgegebenen Werts liegt, der Wert der Spannung an dem Ausgang (34) des zweiten Spannungswandlers (30) auf einen anderen Wert, insbesondere einen niedrigeren Wert, als der zweite Spannungswert eingestellt wird,
wobei der zweite Spanungswert der Wert der Spannung ist, die, wenn festgestellt wurde, dass die Spannung, die am Eingang (22) des ersten Spannungswandlers (20) anliegt, nicht unterhalb des vorgegebenen Werts liegt, am Ausgang (34) des zweiten Spannungswandlers (30) anliegt.
